# EUROPEAN PATENT SPECIFICATION

(11) **EP 4 552 980 B1**
(45) Date of publication and mention of the grant of the patent: **29.07.2026**
(21) Application number: 24166948.0
(22) Date of filing: 27.03.2024
(51) Int. Cl.: B64F 1/20, F21S 8/00, F21V 23/00

(54) **ILLUMINATION DEVICE FOR AIRCRAFT LANDING AREAS AND ILLUMINATION ASSEMBLY COMPRISING TWO OR MORE SAID ILLUMINATION DEVICES**
BELEUCHTUNGSVORRICHTUNG FÜR FLUGZEUGLANDEBEREICHE UND BELEUCHTUNGSANORDNUNG MIT ZWEI ODER MEHR DIESER BELEUCHTUNGSVORRICHTUNGEN
DISPOSITIF D'ÉCLAIRAGE POUR ZONES D'ATTERRISSAGE D'AÉRONEF ET ENSEMBLE D'ÉCLAIRAGE COMPRENANT AU MOINS DEUX DISPOSITIFS D'ÉCLAIRAGE DE CE TYPE

(30) Priority: 26.03.2024 IT 202400006775; 07.11.2023 IT 202300004578 U
(43) Date of publication of application: 14.05.2025
(73) Proprietor: C&E Group S.r.l., 20121 Milano (MI) (IT)
(72) Inventor: DI GIOVINE, Alfonso, 23848 Oggiono (Lecco) (IT)
(74) Representative: Caldon, Giuliano

(56) References cited:
- WO-A1-2016/076715
- CN-U- 207 688 053
- CN-U- 214 535 829

## Description

### Field of application

The present disclosure relates to an illumination device for aircraft landing areas, and an illumination assembly comprising two or more of the aforesaid illumination devices.

The present device and illumination assembly are inserted in the civil and industrial field of production of light signaling devices and are intended to be advantageously employed in order to render a landing area, such as a heliport or a vertiport or an airport, more easily visible to aircrafts, such as for example helicopters, airplanes or drones; such heliports or vertiports can also be present on boats or offshore platforms, as well as on land. Additionally, in particular, the present device and assembly can be advantageously installed both in secure classified areas and in zones classified as potentially explosive, dangerous for structures and workers.

More in detail, the present device and illumination assembly function as light signaling device and are advantageously employed for signaling, to the pilot of an aircraft, the route and area for drop-off and rest on a landing area and the possibility or impossibility of executing the landing on the landing area on which these are installed.

### State of the art

It is known to use light signaling devices mounted on landing platforms, in particular for example heliports installed on marine oil extraction plants or ships, in order to make the landing platform itself more visible for aircraft pilots.

Such light signaling devices are also employed for signaling the possibility or impossibility for an aircraft to land, and such impossibility can for example be due to adverse weather conditions, to the presence of inflammable or explosive gases (e.g. on boats transporting inflammable or explosive material or on fuel transfer areas) or to the presence of another aircraft that occupies the platform.

In particular, the light signaling devices of known type are intended to be installed on the landing platform in order to delimit the circular zone that comes to form the landing area of the heliport and possibly also to delimit a reference symbol traced within the aforesaid area, such as for example the letter "H" that is normally used to indicate the heliport, or the letter "V" that is normally used to indicate the vertiport.

The light signaling devices for heliports of known type, described for example in EP 3218548 A1, WO 2016/076715 A1 and CN 207688053 U, comprise a cover section intended to be fixed to the landing area, extended lengthwise along a main extension direction thereof and provided with an upper wall and with two lowered lateral walls in order to define a containment volume, in which multiple illumination units are partially placed, side-by-side along such main extension direction together with the power supply cables that supply current to the aforesaid illumination units, each of which has its own protective glass dome placed to traverse a corresponding opening made on the upper wall.

Document CN 214535829 U discloses a further light signaling device of known type, which comprises a base body that has a main elongated portion having a frontal face on which multiple seats for light sources are arranged. Moreover, the base body comprises a rear cavity which is made on a lower face of its main elongated portion and houses a control board electrically connected with the light sources. Further, the base body is provided with a central protruding portion, which extends projectingly from a longitudinal side of the main elongate portion and has a frontal cavity which houses a wiring terminal that is electrically connected with the control board placed in the rear cavity. Specifically, the edge of the above protruding portion is provided with two recessed sides at which two corresponding inlet ports are made to connect an input power supply to the wiring terminal housed in the frontal cavity.

The light signaling devices of known type described briefly up to now have in practice shown that they do not lack drawbacks.

The main drawback of the light signaling devices of known type lies in the fact that they are not modular, given that a single cover section is provided that contains a plurality of illumination units side-by-side in sequence along the main extension direction of the same section.

Indeed, depending on the different dimensions of the landing areas, it will be necessary to produce different light signaling devices having their own cover sections with different lengths and adapted to contain a different number of illumination units.

Additionally, a further drawback of the light signaling devices of known type lies in the fact that in order to be able to execute a maintenance or to substitute a single non-functioning illumination, it is necessary to disassembly the entire light signaling device, by removing the cover section, hence leaving all the illumination units (also those that do not require maintenance or substitution) and the power supply cables momentarily exposed to atmospheric agents. In addition, once the maintenance or substitution intervention has terminated, the cover section must be newly fixed, taking care that all the illumination units be correctly positioned with respect thereto.

### Presentation of the finding

In this situation, the problem underlying the present finding is therefore that of eliminating the problems of the abovementioned prior art, by providing an illumination device for aircraft landing areas and an illumination assembly comprising multiple aforesaid illumination devices, which allow attaining modular light signaling devices.

A further object of the present finding is to provide an illumination device for aircraft landing areas, which can be easily subjected to maintenance.

A further object of the present finding is to provide an illumination assembly comprising multiple aforesaid illumination devices, and such illumination assembly can be subjected to maintenance by acting on a particular illumination device to be repaired or substituted, without having to disassembly all the other illumination devices.

A further object of the present finding is to provide an illumination device and an illumination assembly comprising multiple aforesaid illumination devices, which are structurally simple and inexpensive to attain.

A further object of the present finding is to provide an illumination device and an illumination assembly comprising multiple aforesaid illumination devices, which are entirely reliable in operation.

For the aforementioned reasons, the claimed invention provides an illumination device for aircraft landing areas according to claim 1 and an illumination assembly according to claim 13.

### Brief description of the drawings

The technical characteristics of the finding, according to the aforesaid objects, can be clearly seen in the contents of the below-reported claims and the advantages thereof will be more evident from the following detailed description, made with reference to the enclosed drawings, which represent several merely exemplifying and non-limiting embodiments of the invention, in which:

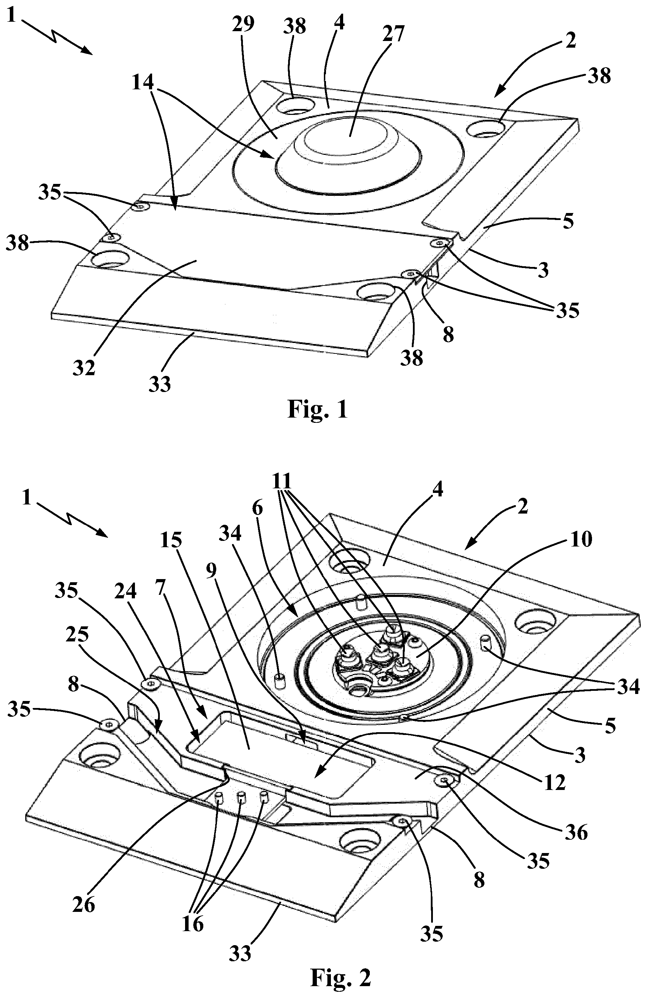

- figure 1 shows a top perspective view of an illumination device, object of the present finding;
- figure 2 shows a top perspective view of the illumination device of figure 1, from which several components were removed in order to better illustrate other components;

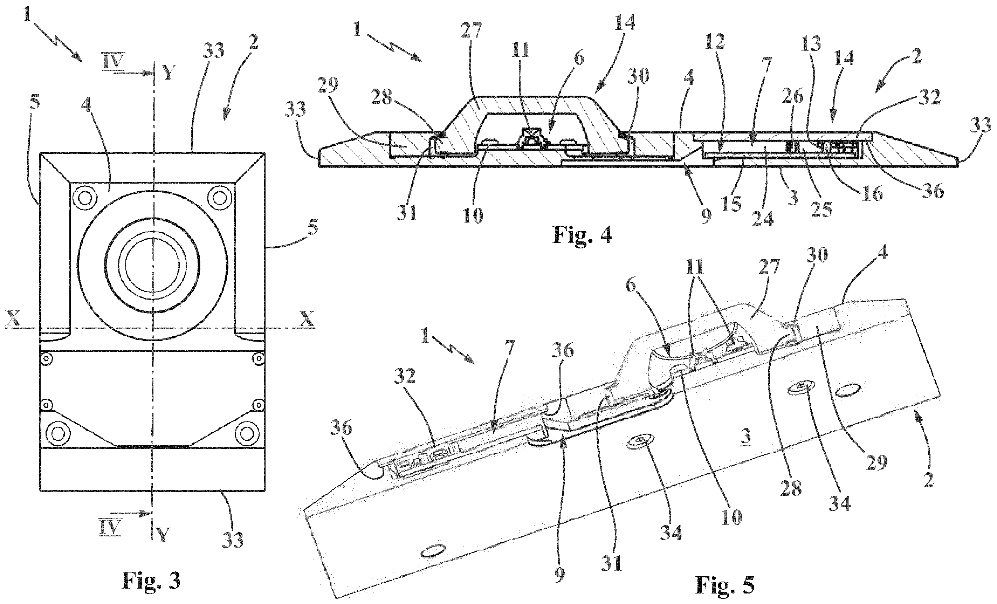

- figure 3 shows a top plan view of the illumination device of figure 1;
- figure 4 shows a lateral sectional view of the illumination device of figure 1, such section made along the trace IV-IV of figure 3;
- figure 5 shows a bottom and sectional perspective view of the illumination device of figure 1, such section obtained along the trace IV-IV of figure 3;
- figure 6 shows a top perspective view of an illumination assembly comprising multiple illumination devices of figure 1;
- figure 7 shows a top, partially exploded perspective view of the illumination assembly of figure 6.

### Detailed description of a preferred embodiment

With reference to the enclosed drawings, reference number 1 overall indicates the illumination device, object of the present finding.

The present illumination device 1 is intended to be advantageously mounted (on its own or together with other identical illumination devices 1 in order to form the illumination assembly 100 discussed in detail hereinbelow) on landing areas, in particular vertiports or heliports installed for example on marine oil extraction plants or ships (whether classified as safe zones or as potentially explosive zones), in order to render the landing area itself more easily visible for a pilot of an aircraft, e.g. a helicopter. Otherwise, the aforesaid illumination device 1 (on its own or together with other illumination devices 1 in order to form the illumination assembly 100 discussed in detail hereinbelow) can be mounted on landing areas, such as for example runways, such to render the runway more visible for an airplane pilot.

The illumination device 1 according to the present finding comprises a base body 2, which has at least one lower face 3, intended to be placed to rest on a landing area, and at least one opposite upper face 4.

More in detail, the aforesaid base body 2 is arranged in order to be fixed on the landing area in a removable manner, in particular by means of third fixing screws 37, which are preferably placed to traverse suitable through holes 38 made on the base body 2 itself and extended between the upper face 4 and the lower face 3.

Advantageously, so as to limit as much as possible the projecting extension of the present illumination device 1 with respect to the plane of the landing area, the base body 2 has substantially flattened form.

In addition, the base body 2 extends along a first extension direction X between two opposite first lateral faces 5 and is provided with a first containment seat 6, of a second containment seat 7 and of a connection channel 9.

The first containment seat 6 is made on the upper face 4 and the second containment seat 7 is in turn made on the aforesaid upper face 4.

The second containment seat 7 also extends between the first lateral faces 5 of the base body 2 and is provided with access openings 8 made on the first lateral faces 5 themselves.

The connection channel 9 also connects together the first and the second containment seats 6, 7.

The illumination device 1 according to the finding comprises a printed circuit board 10, which is placed within the first containment seat 6 and carries, installed therein, at least one LED light source 11.

Advantageously, as illustrated in the enclosed figures, the printed circuit board 10 carries, installed therein, multiple LED light sources 11, e.g. four.

The aforesaid LED light sources 11 can be different from each other. More in detail, with such expression "with different colors" referred to LED light sources 11, it must be intended that such LED light sources 11 can each be arranged for emitting light at a different wavelength with respect to the other LED light sources 11, and such wavelengths can belong to the visible wave field or even to the infrared wave field. In this manner, with the LED light sources 11 of a specific color actuated with the others deactivated, it is possible to provide the pilot of an aircraft (or provide to the sensors of an autonomous aircraft, such as a drone) with different signals, which can communicate in one color the possibility of landing on the landing area and in another color the impossibility of landing, due for example to the presence of explosive or inflammable gases close to the landing area (for example if this is situated on an oil extraction platform) or to the presence of another aircraft already positioned on the same landing area or in the process of landing.

The present illumination device 1 also comprises power supply and control means 12, which are at least partially housed in the second containment seat 7, are electrically connected to the printed circuit board 10 through the connection channel 9 (for example by means of cables that extend along the connection channel 9) at least for power supplying the at least one LED light source 11 and comprise electrical connection elements 13 extended at least up to one of the two access openings 8 of the second containment seat 7.

More in detail, such configuration of the power supply and control means 12, with electrical connection elements 13 which extend at least up to one of the two access openings 8 on the first lateral faces 5, allows easily attaining modular illumination assemblies 100 (as described hereinbelow) functioning as light signaling devices (e.g. for heliports). Indeed, it is sufficient to place, on the landing area, a plurality of illumination devices 1 in sequence, with the electrical connection elements 13 of a first illumination device 1 of the sequence which are connected to a power source (such as for example, the electrical power network or current accumulator and/or current generator) and with the electrical connection elements 13 of the other subsequent illumination devices 1 of the sequence which are each connected to the power supply and control means 12 of an adjacent illumination device 1. In this manner, depending on the shape and size of the landing area, it is possible to attain of the light signaling devices with different size, simply by selecting to install a different number of illumination devices 1 in sequence.

In addition, the present illumination device 1 comprises protective means 14, which are fixed, in particular in a removable manner, to the base body 2, are placed as a cover of the first and second containment seats 6, 7 and are transparent at least to visible light at least at the first containment seat 6.

In this manner, if a maintenance intervention must be executed on an illumination device 1 (e.g. in order to substitute the printed circuit board 10, in the event in which it has the at least one LED light source 11 in a damaged state, or the power supply and control means 12), it is sufficient to remove the aforesaid protective means 14 in order to access the first and second containment seats 6, 7, without it being necessary to disassemble also the other illumination devices 1 if the illumination device 1 subjected to maintenance is part of an illumination assembly 100 as described below.

In order to render, as simple as possible, the connection of the electrical connection elements 13 of the present illumination device 1 to a power supply source or to the power supply and control means 12 of an adjacent illumination device 1, the aforesaid electrical connection elements 13 project from the corresponding access opening 8 of the second containment seat 7.

In addition, the power supply and control means 12 comprise an electronic unit 15, which is housed in the second containment seat 7 and is electrically connected to the printed circuit board 10 through the connection channel 9 (e.g. by means of cables which extend along the aforesaid connection channel 9).

For example, the arrangement of an electronic unit 15 in the illumination device 1 allows attaining illumination assemblies 100 formed by multiple illumination devices 1 in which there is a master-slave architecture, and such master-slave architecture in particular provides that there is a central electronic control unit arranged for selecting one from among different illumination modes and that the electronic units 15 of each illumination device 1 drive the operation of the at least one corresponding LED light source 11 as a function of the particular illumination mode set by the central electronic control unit.

The electrical connection elements 13 are electrically connected to the electronic unit 15 and extend starting therefrom within the second containment seat 7 at least up to the corresponding access opening 8 of the second containment seat 7, preferably projecting from the aforesaid access opening 8 as stated above.

Advantageously, the electronic unit 15 comprises contact terminations 16 and the electrical connection elements 13 comprise at least one plate 17, which is provided with conductive tracks 18, one for each contact termination 16 of the electronic unit 15. More in detail, the arrangement of electrical connection elements 13 in plate form 17 with conductive tracks 18 allows reducing, as much as possible the depth of the second containment seat 7, thus allowing the use of a base body 2 as flat as possible in order to make the present illumination device 1.

In particular, the electronic unit 15 comprises at least three contact terminations 16 and the plate 17 of the electrical connection elements 13 comprises at least three corresponding conductive tracks 18, including two power conductive tracks 18 set for the electrical power supply of the at least one LED light source 11 through the electronic unit 15 and at least one signal conductive track 18 set for the data communication with the electronic unit 15.

For example, the at least one signal conductive track 18 is arranged for carrying information relative to the state of the at least one LED light source 11.

Preferably, the electronic unit 15 comprises more than three contact terminations 16 and the plate 17 of the electrical connection elements 13 comprises a corresponding number of conductive tracks 18, including two power conductive tracks 18 set for the electrical power supply of the at least one LED light source 11 through the electronic unit 15 and the others that are signal conductive tracks 18 set for the data communication with the electronic unit.

In addition to carrying information relative to the state of the at least one LED light source 11, such signal conductive tracks 18 can for example carry information relative to a particular illumination mode of the at least one LED light source 11, in particular if it is dimmable or if multiple LED light sources 11 with different colors are present.

Advantageously, the plate 17 of the electrical connection elements 13 extends between a first end 19 housed in the second containment seat 7 and a second end 20 placed outside the second containment seat 7 and projecting from the corresponding access opening 8. In particular, the conductive tracks 18 each extend between a first hole 21, which is made on the plate 17 at the first end 19 and is engaged by a corresponding contact termination 16 of the electronic unit 15, and a second hole 22, which is made on the plate 17 at the second end 20.

More in detail, the second holes 20 are intended to be engaged by corresponding contact terminations 16 of the electronic unit 15 of the power supply and control means 12 of an adjacent illumination device 1 constituting part of the illumination assembly 100 described in more in detail hereinbelow, in a manner such that the electrical power supply and the data directed to the electronic unit 15 arrive from the electronic unit 15 of the adjacent illumination device 1 connected in sequence.

In order to render, as secure as possible, the connection of the conductive tracks 18 with the contact terminations 16 of the respective electronic unit 15, the contact terminations 16 of the electronic unit 15 each advantageously comprise at least one threaded rod portion, which is placed to traverse the first hole 21 of a corresponding conductive track 18 of the plate 17 and carries, screwed thereto, a threaded nut 23 in order to block the aforesaid plate 17 in position.

More in detail, the electronic unit 15 comprises a main body, from which the contact terminations 16 project, and the plate 17 (traversed by the contact terminations 16 at the first holes 21 of the conductive tracks 18) is blocked, interposed between the main body of the electronic unit and the threaded nuts 23 screwed on the aforesaid contact terminations 16.

The second containment seat 7 is divided at least into a housing chamber 24, which is spaced from the first lateral faces 5, and in a passage channel 25, which extends between the two access openings 8 and communicates with the housing chamber 24 through a passage opening 26.

The electronic unit 15 is at least mainly placed in the housing chamber 24 and the electrical connection elements 13 extend at least partly within the passage channel 25 from the electronic unit 15 up to at least the corresponding access opening 8 and, in particular, project therefrom.

More in detail, the electrical connection elements 13 extend partly along the passage channel 25 starting from the electronic unit 15, substantially at the passage opening 26, up to traversing the corresponding access opening 8 in order to project therefrom, hence substantially occupying half of the passage channel 25, while the other half of the passage channel 25 is intended to be crossed by the electrical connection elements 13 (projecting from the respective access opening 8) of the power supply and control means 12 of an adjacent illumination device 1, in a manner such to allow the latter to connect in sequence the electronic units 15 of the two illumination devices 1 that are adjacent to each other and constituting part of a same illumination assembly 100, described hereinbelow.

Advantageously, the housing chamber 24 of the second containment seat 7 is counter-shaped with respect to at least part of the electronic unit 15 (preferably to at least part of the main body of the electronic unit 15) in order to maintain the electronic unit 15 blocked in position.

More in detail, most of the main body of the electronic unit is housed (in particular to size) in the housing chamber 24 of the second containment seat 7 and a part of the aforesaid main body traverses the passage opening 26, in a manner such that the contact terminations 16 are situated in the passage channel 25. In this manner, one therefore prevents the plate 17 of the electrical connection elements 12 from having to extend partly inside the housing chamber 24, thus ensuring that the shape of the aforesaid plate 17 is as simple as possible.

Preferably, the connection channel 9 extends from the housing chamber 24 of the second containment seat 7 to the first containment seat 6, where in particular the housing chamber 24 is interposed between the passage channel 25 and the second containment seat 6.

In order to be able to seal, in the simplest possible manner, the first and second containment seats 6, 7 by means of the protective means 14, the connection channel 9 advantageously extends between the first and the second containment seat 6, 7 for at least part of its length on the lower face 3 of the base body 2.

In this manner, the first and the second containment seat 6, 7 are separated from each other at the upper face 4 of the base body 2 (being connected instead at the lower face 3), and hence they can be sealed, one independently from the other, by means of the protective means 14.

Advantageously, the protective means 14 comprise at least one protective dome 27, which is placed at the first containment seat 6 in order to cover the printed circuit board 10 and the at least one LED light source 11 and is made of material that is transparent at least to visible light, e.g. made of tempered glass.

More in detail, the aforesaid protective dome 27 is provided with a perimeter flange 28 and, in addition, the protective means 14 are provided with a blocking ring 29, which is traversed by the protective dome 27 itself, is provided with at least one undercut portion 30 placed against the perimeter flange 28 and is fixed to the base body 2 in order to block the protective dome 27, maintaining the perimeter flange 28 interposed under pressure between the undercut portion 30 thereof and the base body 2.

Preferably, the blocking ring 29 is fixed to the base body 2 in a removable manner (in a manner such to remove it and to also remove the protective dome 27 when it is necessary to execute a maintenance or substitution intervention on the printed circuit board 10 and/or on the at least one LED light source 11), in particular by means of first fixing screws 34 (which can be screwed to and unscrewed from the base body 2).

More in detail, the first fixing screws 34 are placed to traverse the base body 2 starting from the lower face 3 and are inserted in corresponding threaded holes made on the blocking ring 29 itself.

Otherwise, in accordance with a non-illustrated different embodiment, the first fixing screws 34 are placed to traverse the blocking ring 29 and are inserted in corresponding threaded holes made on the base body 2 and extended starting from the upper face 4. Preferably, the blocking ring 29 is placed in the first containment seat 6 and, still more preferably, has thickness, along a direction orthogonal to the lower face 3 of the base body 2, substantially equal to the depth of the first containment seat 6, in a manner such that the blocking ring 29 is situated substantially flush with the upper face 4 of the base body 2.

More in detail, the configuration of the protective means 14, with blocking ring 29 placed in the first containment seat 6 and first fixing screws 34 placed to traverse the base body 2 starting from the lower face 3, allows thinning, as much as possible, the base body 2, obtaining the threaded holes (which require a specific extension) on the blocking ring 29 and not on the base body 2 (which at the first containment seat 6 can thus have particularly limited thickness).

Advantageously, the protective means 14 comprise at least one gasket 31, which is extended along the perimeter flange 28.

More in detail, such gasket 31 has annular form, in a manner such to be able to extend along the perimeter flange 28.

Preferably, at least part of the gasket 31 is interposed between the undercut portion 30 of the blocking ring 29 and the perimeter flange 28 of the protective dome 27 and at least part of the gasket 31 is interposed between the perimeter flange 28 and the base body 2, in a manner such that the external agents, such as water, cannot filter within the part of first containment seat 6 delimited by the protective dome 27, i.e. in the part of the first containment seat 6 where the printed circuit board 10 is situated with LED light source 11.

Indeed, the gasket part 31 interposed between undercut portion 30 and perimeter flange 28 tends to prevent external agents from entering between the blocking ring 29 and the protective dome 27 and, if the aforesaid external agents have still succeeded in entering, the gasket part 31 interposed between the perimeter flange 28 and the base body 2 prevents them from flowing within the protective dome 27, passing between it and the bottom of the first containment seat 6.

Still more preferably, the gasket 31 has substantially "C" shaped section, in a manner such to define the gasket part 31 that will be interposed between the undercut portion 30 and the perimeter flange 28 and the gasket part 31 that will be interposed between perimeter flange 28 and base body 2.

Advantageously, the printed circuit board 10 and the at least one LED light source 11 are covered by a first resin layer (preferably polymer), which is transparent in order to allow the light emitted by the LED light source 11 to exit outward from the first containment seat 6.

In addition, such first resin layer preferably has electrical insulator and thermal dissipator properties.

More in detail, the arrangement of the aforesaid first resin layer has the advantage of making it impossible for the present illumination device 1 to trigger explosions, rendering it suitable also for being installed in zones classified as potentially explosive. For example, the first resin layer is attained with a polyurethane resin or possibly with an epoxy resin, or any one other resin as long as transparent and capable of protecting the printed circuit board 10 and the at least one LED light source 11 from moisture infiltration and/or from the stresses due to a possible explosion.

Preferably, the first resin layer occupies the entire volume of the first containment seat 6 delimited by the protective dome 27.

In particular, such first resin layer is obtained by positioning the lower face 3 of the base body 2 upward and pouring from above the resin at the fluid state (e.g. bi-component gel) in the first containment seat 6 through the connection channel 9 which is open on the lower face 3, until the entire volume of the first containment seat 6 delimited by the protective dome 27 is occupied by the resin.

Advantageously, the second containment seat 7 is covered by a second resin layer (preferably polymeric, e.g. silicone, epoxy or the like), in particular at least almost up to the upper face 4 of the base body 2 in order to insulate the part of the power supply and control means 12 (in particular the electronic unit 15 and at least the first end 19 of the plate 17 of the electrical connection elements 13 where there are the first holes 21 of the engaged conductive tracks 18 of the contact terminations 16) housed in the second containment seat 7.

In particular, such second polymer resin layer is obtained by pouring a polymer resin in gel form, e.g. bicomponent, above the power supply and control means 12 within the second containment seat 7 up to at least nearly reaching the first upper face 4 of the base body 2 and then allowing such resin to harden.

More in detail, therefore, both the conductive track 18 of the plate 17 and the contact terminations 16 with the threaded nuts 23 are covered by such second polymer resin layer, so as to ensure the seal against the accidental penetration of moisture.

In addition, advantageously, the protective means 14 comprise at least one cover 32, which is fixed to the base body 2 at the second containment seat 7 in order to cover at least part of the power supply and control means 12 (i.e. in particular the part of the power supply and control means 12 contained in the second containment seat 7).

More in detail, the cover 32 is fixed to the base body 2 in a removable manner (in a manner such to allow removing it when it is necessary to execute a maintenance or substitution intervention on the power supply and control means 12), in particular by means of second fixing screws 35 (which can be screwed to and unscrewed from the base body 2).

Preferably, in the second containment seat 7, an abutment step 36 is present (which in particular is placed to delimit the housing chamber 24 and the passage channel 25) which is lowered with respect to the upper face 4 of the base body 2 and, in addition, the cover 32 is placed in the second containment seat 7 on the abutment step 36, in a manner such that the aforesaid cover 32 is still more preferably placed substantially flush with the upper face 4.

Advantageously, the first lateral faces 5 of the base body 2 are parallel to each other, in a manner such that it is particularly simple to flank multiple illumination devices 1, by placing one of the lateral faces 5 of the base body 2 of each illumination device 1 facing a lateral face 5 of the base body 2 of the adjacent illumination device 1.

In particular, the base body 2 has substantially rectangular or square planar shape, and is extended, along the first extension direction X, between the first lateral faces 5 and, along a second extension direction Y orthogonal to the first extension direction X, between two opposite second lateral faces 33, which are parallel to each other and are placed to connect the first lateral faces 5.

Advantageously, as is the norm, the present illumination device 1 is provided with a maximum height (in particular along a direction perpendicular to the lower face 3) lower than 25 mm.

In addition, preferably, the present illumination device 1 can be trodden on, i.e. more in detail it is resistant to being trodden on by aircraft abutment bases or wheels.

Also forming the object of the present finding is an illumination assembly 100 for aircraft landing areas, in particular for heliports, vertiports or airports.

Such illumination assembly 1 comprises two or more illumination devices 1 of the type described above, which are placed side-by-side in sequence, adjacent to each other, in which one of the two first lateral faces 5 of the base body 2 of each illumination device 1 faces one of the two first lateral faces 5 of the base body 2 of the adjacent illumination device, and in which the access openings 8 made on such facing first lateral faces 5 are communicating with each other.

In addition, the electrical connection elements 13 of the power supply and control means 12 of one of the illumination devices 1 (i.e. in particular the first illumination device 1 of the sequence of illumination devices 1 side-by-side each other) are susceptible of being connected to an electrical power supply source (such as for example the electrical power network or a current generator and/or accumulator) and the electrical connection elements 13 of the power supply and control means 12 of each of the other one or more illumination devices 1 (i.e. in particular all the illumination devices 1 of the sequence following the first illumination device 1) are connected in sequence to the power supply and control means 12 of the adjacent illumination device 1.

More in detail, such configuration of the electrical connection elements 13 render the illumination assembly 100 modular, since it is possible to select the number of illumination devices 1 as a function of the shape and size of the landing area to be signaled, and install aforesaid illumination devices 1 next to each other in sequence, with the first illumination device 1 of the sequence that is power supplied directly by a power supply source, such as for example the electrical power network, and the other successive illumination devices 1 which are each connected to the power supply and control means 12 of the adjacent illumination device 1 in order to be indirectly power supplied by the same power supply source through the power supply and control means 12 of the other illumination devices 1 in sequence.

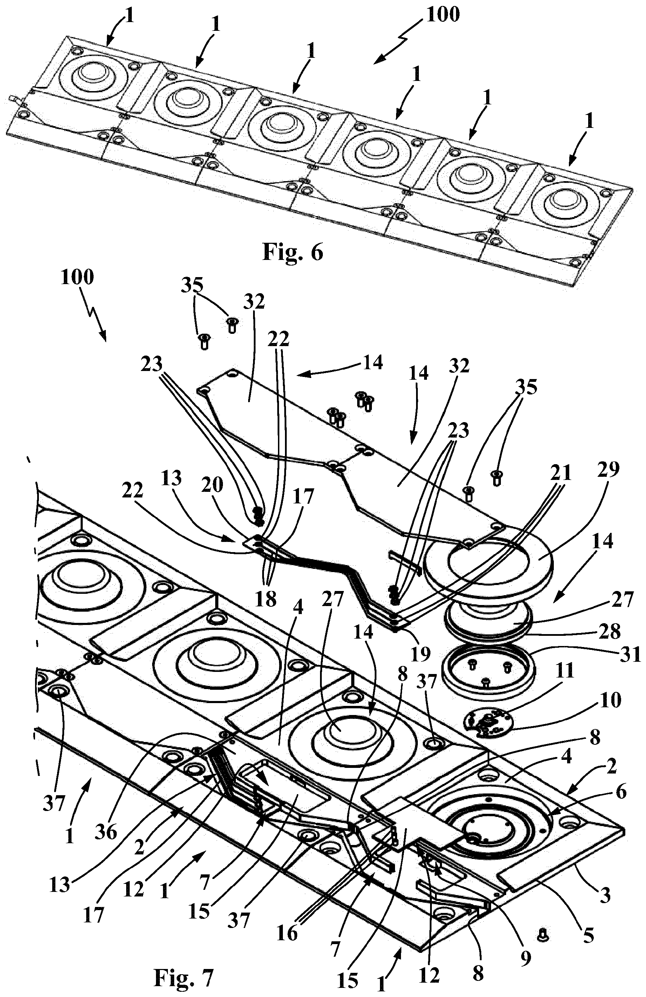

Advantageously, the illumination assembly 100 comprises more than two side-by-side illumination devices 1, for example six illumination devices 1 as illustrated in figure 6. Advantageously, as described above, the power supply and control means 12 of each illumination device 1 comprise an electronic unit 15, which is housed in the second containment seat 7 of the corresponding base body 2 and is electrically connected to the respective printed circuit board 10 through the connection channel 9.

In addition, the electrical connection elements 13 are advantageously electrically connected to the corresponding electronic unit 15 and extend starting therefrom within the second containment seat 7 of the corresponding base body 2 at least up to the corresponding access opening 8 of the second containment seat 7.

In addition, the aforesaid electrical connection elements 13 of each illumination device 1 of the illumination assembly 100 preferably project from the corresponding access opening 8.

More in detail, the electrical connection elements 13 of the power supply and control means 12 of one or more of the illumination devices 1 (i.e. in particular all the illumination devices 1 following the first illumination device 1 of the sequence) advantageously project from the corresponding access opening 8, traverse one of the two access openings 8 of the second containment seat 7 of the base body 2 of the adjacent illumination device 1, are partly extended within the latter second containment seat 7 and are electrically connected to the electronic unit 15 of the power supply and control means 12 of the adjacent illumination device 1.

In addition, the electronic unit 15 of the power supply and control means 12 of each illumination device 1 of the illumination assembly 100 advantageously comprises contact terminations 16.

Additionally, the electrical connection elements 13 of the power supply and control means 2 of at least one or more illumination devices 1 of the illumination assembly 100 (i.e. the electrical connection elements 13 of at least all the illumination devices 1 following the first illumination device 1 of the sequence) comprise at least one plate 17, which is provided with conductive tracks 18, one for each contact termination 16 of the respective electronic unit 15 (indeed, the electrical connection elements 13 of the power supply and control means 12 of the first illumination device 1 of the sequence can have a shaping different from the plate 17 with conductive tracks, able to be for example simple power supply cables connectable to a power supply source, such as the electrical power network or a current generator and/or accumulator).

Preferably, the plate 17 of the electrical connection elements 13 extends between a first end 19 housed in the second containment seat 7 of the base body 2 of the illumination device 1 to which they belong and a second end 20, which is placed outside the corresponding second containment seat 7, projects from the corresponding access opening 8 and is housed in the second containment seat 7 of the base body 2 of the adjacent illumination device 1.

Preferably, the conductive tracks 18 each extend between a first hole 21, which is made on the plate 17 at the first end 19 and is engaged by a corresponding contact termination 16 of the electronic unit 15 of the power supply and control means 12 of the illumination device 1 to which the same plate 17 belongs, and a second hole 22, which is made on the plate 17 at the second end 20 and is engaged by a corresponding contact termination 16 of the electronic unit 15 of the power supply and control means 12 of the adjacent illumination device 1.

Additionally, each contact termination 16 of the electronic unit 15 of the power supply and control means 12 of each illumination device 1 of the illumination assembly 100 advantageously comprises at least one threaded rod portion.

Each threaded rod portion is advantageously placed to traverse the first hole 21 of a conductive track 18 of the plate 17 which belongs to the same illumination device 1 and carries, screwed thereto, a threaded nut 23 in order to block the plate 17 in position at its first end 19 or is placed to traverse the second hole 22 of a conductive track 18 of the plate 17 of the adjacent illumination device 17 and carries, screwed thereto, a threaded nut 23 in order to block such plate 17 of the adjacent illumination device 1 in position at its second end 20.

The finding thus conceived therefore attains the pre-established objects.

## Claims

1. Illumination device (1) for aircraft landing areas, in particular for heliports, vertiports or airports, which comprises:
- a base body (2), which has at least one lower face (3), intended to be placed to rest on a landing area, and at least one opposite upper face (4); said base body (2) extending along a first extension direction (X) between two opposite first lateral faces (5) and being provided with:
- a first containment seat (6) made on said upper face (4);
- a second containment seat (7), which is made on said upper face (4), extends between said first lateral faces (5) and is provided with access openings (8) made on said first lateral faces (5) themselves;
- a connection channel (9), which connects together said first and second containment seats (6, 7);
- a printed circuit board (10), which is placed within said first containment seat (6) and carries, installed therein, at least one LED light source (11);
- power supply and control means (12), which are at least partially housed in said second containment seat (7), are electrically connected to said printed circuit board (10) through said connection channel (9) at least for power supplying said at least one LED light source (11) and comprise electrical connection elements (13) extending at least up to one of the two access openings (8) of said second containment seat (7);
- protective means (14), which are fixed to said base body (2), are placed as a cover of said first and second containment seats (6, 7) and are transparent at least to visible light at least at said first containment seat (6);
wherein said power supply and control means (12) comprise an electronic unit (15), which is housed in said second containment seat (7) and is electrically connected to said printed circuit board (10) through said connection channel (9); said electrical connection elements (13) being electrically connected to said electronic unit (15) and extending, starting therefrom, within said second containment seat (7) at least up to the corresponding access opening (8) of said second containment seat (7);
**characterized in that** said second containment seat (7) is divided at least into a housing chamber (24), which is spaced from said first lateral faces (5), and into a passage channel (25), which extends between the two said access openings (8) and communicates with said housing chamber (24) through a passage opening (26); said electronic unit (15) being at least mainly placed in said housing chamber (24) and said electrical connection elements (13) extending at least partly within said passage channel (25) from said electronic unit (15) up to at least the corresponding said access opening (8) .

2. Illumination device (1) according to claim 1, **characterized in that** said electrical connection elements (13) project from the corresponding access opening (8) of said second containment seat (7).

3. Illumination device (1) according to claim 1 or 2, **characterized in that** said electronic unit (15) comprises contact terminations (16) and said electrical connection elements (13) comprise at least one plate (17), which is provided with conductive tracks (18), one for each contact termination (16) of said electronic unit (15).

4. Illumination device (1) according to claims 2 and 3, **characterized in that** the plate (17) of said electrical connection elements (13) extends between a first end (19) housed in said second containment seat (7) and a second end (20) placed outside said second containment seat (7) and projecting from the corresponding said access opening (8); said conductive tracks (18) extending each between a first hole (21), which is made on said plate (17) at said first end (19) and is engaged by a corresponding contact termination (16) of said electronic unit (15), and a second hole (22), which is made on said plate (17) at said second end (20).

5. Illumination device (1) according to claim 4, **characterized in that** the contact terminations (16) of said electronic unit (15) each comprise at least one threaded rod portion, which is placed to traverse the first hole (21) of a corresponding conductive track (18) of said plate (17) and carries, screwed thereto, at least one threaded nut (23) in order to block said plate (17) in position.

6. Illumination device (1) according to any one of claims 3 to 5, **characterized in that** said electronic unit (15) comprises at least three said contact terminations (16) and the plate (17) of said electrical connection elements (13) comprises at least three corresponding said conductive tracks (18), including two power conductive tracks (18) set for the electrical power supply of said at least one LED light source (11) through said electronic unit (15) and at least one signal conductive track (18) set for the data communication with said electronic unit (15).

7. Illumination device (1) according to any one of the preceding claims, **characterized in that** said connection channel (9) extends between said first and second containment seats (6, 7) for at least part of its length on the lower face (3) of said base body (2).

8. Illumination device (1) according to any one of the preceding claims, **characterized in that** said second containment seat (7) is covered by a second polymer resin layer at least almost up to the upper face (4) of said base body (2) in order to insulate the part of said power supply and control means (12) housed in said second containment seat (7).

9. Illumination device (1) according to any one of the preceding claims, **characterized in that** said protective means (14) comprise at least one protective dome (27), which is placed at said first containment seat (6) in order to cover said printed circuit board (10) and said at least one LED light source (11) and is made of material that is transparent at least to visible light.

10. Illumination device (1) according to claim 9, **characterized in that** said protective dome (27) is provided with a perimeter flange (28);
said protective means (14) being provided with a blocking ring (29), which is traversed by said protective dome (27), is provided with at least one undercut portion (30) placed against said perimeter flange (28) and is fixed to said base body (2) in order to block said protective dome (27), maintaining said perimeter flange (28) interposed under pressure between said undercut portion (30) thereof and said base body (2).

11. Illumination device (1) according to claim 10, **characterized in that** said protective means (14) comprise at least one gasket (31), which extends along said perimeter flange (28);
at least part of said gasket (31) being interposed between the undercut portion (30) of said blocking ring (29) and the perimeter flange (28) of said protective dome (27) and at least part of said gasket (31) being interposed between said perimeter flange (28) and said base body (2).

12. Illumination device (1) according to any one of the preceding claims, **characterized in that** said protective means (14) comprise at least one cover (32), which is fixed to said base body (2) at said second containment seat (7) in order to cover at least part of said power supply and control means (12).

13. Illumination assembly (100) for aircraft landing areas, in particular for heliports, vertiports or airports, which comprises two or more illumination devices (1) according to any one of the preceding claims, placed side-by-side in sequence, adjacent to each other, in which one of the two first lateral faces (5) of the base body (2) of each said illumination device (1) faces one of the two first lateral faces (5) of the base body (2) of the adjacent device, and in which the access openings (8) made on such facing first lateral faces (5) are communicating with each other;
the electrical connection elements (13) of the power supply and control means (12) of one of said illumination devices (1) being susceptible of being connected to an electrical power supply source and the electrical connection elements (13) of the power supply and control means (12) of each of the other one or more said illumination devices (1) being connected in sequence to the power supply and control means (12) of the adjacent said illumination device (1).

## Patentansprüche

1. Beleuchtungsvorrichtung (1) für Flugzeuglandebereiche, insbesondere für Hubschrauberlandeplätze, Vertiports oder Flughäfen, die Folgendes umfasst:
- einen Grundkörper (2), der mindestens eine Unterseite (3), die dazu bestimmt ist, auf einem Landebereich zu ruhen, und mindestens eine gegenüberliegende Oberseite (4) aufweist; wobei der genannte Grundkörper (2) entlang einer ersten Verlaufsrichtung (X) zwischen zwei gegenüberliegenden ersten Seitenflächen (5) verläuft und mit Folgendem ausgestattet ist:
- einem ersten Aufnahmesitz (6), der auf der genannten Oberseite (4) eingerichtet ist;
- einem zweiten Aufnahmesitz (7), der auf der genannten Oberseite (4) eingerichtet ist, zwischen den genannten ersten Seitenflächen (5) verläuft und mit Zugangsöffnungen (8) versehen ist, die auf den genannten ersten Seitenflächen (5) selbst eingerichtet sind;
- einem Anschlusskanal (9), der den genannten ersten und zweiten Aufnahmesitz (6, 7) miteinander verbindet;
- einer Leiterplatte (10), die in dem genannten ersten Aufnahmesitz (6) angeordnet ist und mindestens eine darin installierte LED-Lichtquelle (11) trägt;
- Stromversorgungs- und Steuermittel (12), die mindestens teilweise in dem genannten zweiten Aufnahmesitz (7) untergebracht sind, an die genannte Leiterplatte (10) über den genannten Verbindungskanal (9) mindestens für die Stromversorgung der genannten mindestens einen LED-Lichtquelle (11) elektrisch angeschlossen sind und elektrische Anschlusselemente (13) umfassen, die mindestens bis zu einer der beiden Zugangsöffnungen (8) des genannten zweiten Aufnahmesitzes (7) verlaufen;
- Schutzmittel (14), die an dem genannten Grundkörper (2) befestigt sind, als Abdeckung der genannten ersten und zweiten Aufnahmesitze (6, 7) angeordnet sind und mindestens für sichtbares Licht mindestens an dem genannten ersten Aufnahmesitz (6) transparent sind;
wobei die genannten Stromversorgungs- und Steuermittel (12) eine elektronische Einheit (15) umfassen, die in dem genannten zweiten Aufnahmesitz (7) untergebracht ist und über den genannten Verbindungskanal (9) elektrisch an die Leiterplatte (10) angeschlossen ist; wobei die genannten elektrischen Anschlusselemente (13) elektrisch an die elektronische Einheit (15) angeschlossen sind und, von dieser ausgehend, im Inneren des genannten zweiten Aufnahmesitzes (7) mindestens bis zu der entsprechenden Zugangsöffnung (8) des genannten zweiten Aufnahmesitzes (7) verlaufen;
**dadurch gekennzeichnet, dass**
der genannte zweite Aufnahmesitz (7) mindestens in eine Gehäusekammer (24), die sich zu den genannten ersten Seitenflächen (5) im Abstand befindet, und in einen Durchgangskanal (25), der zwischen den beiden genannten Zugangsöffnungen (8) verläuft und mit der genannten Gehäusekammer (24) über eine Durchgangsöffnung (26) in Verbindung steht, unterteilt ist; wobei die genannte elektronische Einheit (15) mindestens hauptsächlich in der genannten Gehäusekammer (24) angeordnet ist und die genannten elektrischen Anschlusselemente (13) mindestens teilweise im Inneren des genannten Durchgangskanals (25) von der genannten elektronischen Einheit (15) bis zu mindestens der entsprechenden genannten Zugangsöffnung (8) verlaufen.

2. Beleuchtungsvorrichtung (1) nach Anspruch 1, **dadurch gekennzeichnet, dass** die genannten elektrischen Anschlusselemente (13) aus der entsprechenden Zugangsöffnung (8) des genannten zweiten Aufnahmesitzes (7) herausragen.

3. Beleuchtungsvorrichtung (1) nach Anspruch 1 oder 2, **dadurch gekennzeichnet, dass** die genannte elektronische Einheit (15) Kontaktanschlüsse (16) umfasst und die genannten elektrischen Anschlusselemente (13) mindestens eine Platte (17) umfassen, die mit Leiterbahnen (18) versehen ist, eine für jeden Kontaktanschluss (16) der genannten elektronischen Einheit (15).

4. Beleuchtungsvorrichtung (1) nach Anspruch 2 und 3, **dadurch gekennzeichnet, dass** die Platte (17) der genannten elektrischen Anschlusselemente (13) zwischen einem ersten Ende (19), das in dem genannten zweiten Aufnahmesitz (7) untergebracht ist, und einem zweiten Ende (20), das außerhalb des genannten zweiten Aufnahmesitzes (7) angeordnet ist, verläuft und aus der entsprechenden genannten Zugangsöffnung (8) herausragt; wobei die genannten Leiterbahnen (18) jeweils zwischen einer ersten Öffnung (21), die auf der genannten Platte (17) an dem genannten ersten Ende (19) eingerichtet ist und mit einem entsprechenden Kontaktanschluss (16) der genannten elektronischen Einheit (15) in Eingriff steht, und einer zweiten Öffnung (22), die auf der genannten Platte (17) an dem genannten zweiten Ende (20) eingerichtet ist, verlaufen.

5. Beleuchtungsvorrichtung (1) nach Anspruch 4, **dadurch gekennzeichnet, dass** die Kontaktanschlüsse (16) der genannten elektronischen Einheit (15) jeweils mindestens einen Gewindestangenabschnitt umfassen, der so angeordnet ist, dass er die erste Öffnung (21) einer entsprechenden Leiterbahn (18) der genannten Platte (17) überquert, und, mit ihm verschraubt, mindestens eine Gewindemutter (23) trägt, um die genannte Platte (17) in ihrer Position zu sichern.

6. Beleuchtungsvorrichtung (1) nach einem beliebigen der Ansprüche 3 bis 5, **dadurch gekennzeichnet,**
**dass** die genannte elektronische Einheit (15) mindestens drei genannte Kontaktanschlüsse (16) umfasst und die Platte (17) der genannten elektrischen Anschlusselemente (13) mindestens drei entsprechende genannte Leiterbahnen (18) umfasst, darunter zwei Stromleiterbahnen (18) für die elektrische Stromversorgung der genannten mindestens einen LED-Lichtquelle (11) über die genannte elektronische Einheit (15) und mindestens eine Signalleiterbahn (18) für die Datenkommunikation mit der genannten elektronischen Einheit (15).

7. Beleuchtungsvorrichtung (1) nach einem beliebigen der vorangegangenen Ansprüche, **dadurch gekennzeichnet, dass** der genannte Anschlusskanal (9) zwischen dem genannten ersten und zweiten Aufnahmesitz (6, 7) über mindestens einen Teil seiner Länge an der Unterseite (3) des genannten Grundkörpers (2) verläuft.

8. Beleuchtungsvorrichtung (1) nach einem beliebigen der vorangegangenen Ansprüche, **dadurch gekennzeichnet, dass** der genannte Aufnahmesitz (7) mit einer zweiten Polymerharzschicht mindestens fast bis zur Oberseite (4) des genannten Grundkörpers (2) bedeckt ist, um den in dem genannten zweiten Aufnahmesitz (7) untergebrachten Teil der genannten Stromversorgungs- und Steuermittel (12) zu isolieren.

9. Beleuchtungsvorrichtung (1) nach einem beliebigen der vorangegangenen Ansprüche, **dadurch gekennzeichnet, dass** die genannten Schutzmittel (14) mindestens eine Schutzkuppel (27) umfassen, die an dem genannten ersten Aufnahmesitz (6) angeordnet ist, um die genannte Leiterplatte (10) und die genannte mindestens eine LED-Lichtquelle (11) abzudecken, und aus Material hergestellt ist, das mindestens für sichtbares Licht transparent ist.

10. Beleuchtungsvorrichtung (1) nach Anspruch 9, **dadurch gekennzeichnet, dass** die genannte Schutzkuppel (27) mit einem umlaufenden Flansch (28) versehen ist;
wobei die genannten Schutzmittel (14) mit einem Sicherungsring (29) versehen sind, der von der genannten Schutzkuppel (27) überquert wird, mit mindestens einem hinterschnittenen Abschnitt (30) versehen ist, der gegen den genannten umlaufenden Flansch (28) angeordnet ist, und an dem genannten Grundkörper (2) befestigt ist, um die genannte Schutzkuppel (27) zu sichern, wobei der genannte umlaufende Flansch (28) unter Druck zwischen dem genannten hinterschnittenen Abschnitt (30) desselben und dem genannten Grundkörper (2) gehalten wird.

11. Beleuchtungsvorrichtung (1) nach Anspruch 10, **dadurch gekennzeichnet, dass** die genannten Schutzmittel (14) mindestens eine Dichtung (31) umfassen, die entlang des genannten umlaufenden Flansches (28) verläuft;
wobei mindestens ein Teil der genannten Dichtung (31) zwischen dem hinterschnittenen Abschnitt (30) des genannten Sicherungsrings (29) und dem umlaufenden Flansch (28) der genannten Schutzkuppel (27) eingefügt ist und mindestens ein Teil der genannten Dichtung (31) zwischen dem genannten umlaufenden Flansch (28) und dem genannten Grundkörper (2) eingefügt ist.

12. Beleuchtungsvorrichtung (1) nach einem beliebigen der vorangegangenen Ansprüche, **dadurch gekennzeichnet, dass** die genannten Schutzmittel (14) mindestens eine Abdeckung (32) umfassen, die an dem genannten Grundkörper (2) an dem genannten zweiten Aufnahmesitz (7) befestigt ist, um mindestens einen Teil der genannten Stromversorgungs- und Steuermittel (12) abzudecken.

13. Beleuchtungsanordnung (100) für Flugzeuglandebereiche, insbesondere für Hubschrauberlandeplätze, Vertiports oder Flughäfen, die zwei oder mehr Beleuchtungsvorrichtungen (1) nach einem beliebigen der vorangegangenen Ansprüche umfasst, die nebeneinander der Reihe nach, aneinander angrenzend, angeordnet sind, wobei eine der beiden ersten Seitenflächen (5) des Grundkörpers (2) jeder genannten Beleuchtungsvorrichtung (1) einer der beiden ersten Seitenflächen (5) des Grundkörpers (2) der angrenzenden Vorrichtung gegenüberliegt und wobei die in diesen einander gegenüberliegenden ersten Seitenflächen (5) ausgebildeten Zugangsöffnungen (8) miteinander in Verbindung stehen;
wobei die elektrischen Anschlusselemente (13) der Stromversorgungs- und Steuermittel (12) einer der genannten Beleuchtungsvorrichtungen (1) geeignet sind, an eine elektrische Stromversorgungsquelle angeschlossen zu werden und die elektrischen Anschlusselemente (13) der Stromversorgungs- und Steuermittel (12) jeder der anderen einen oder mehreren Beleuchtungsvorrichtungen (1) der Reihe nach an die Stromversorgungs- und Steuermittel (12) der angrenzenden genannten Beleuchtungsvorrichtung (1) angeschlossen sind.

## Revendications

1. Dispositif d'éclairage (1) pour zones d'atterrissage d'aéronef, en particulier pour héliports, vertiports ou aéroports, comprenant :
- un corps de base (2), qui comporte au moins une face inférieure (3), destiné à être placé en repos sur une zone d'atterrissage, et au moins une face supérieure opposée (4) ; ledit corps de base (2) s'étendant le long d'une première direction d'extension (X) entre deux premières faces latérales (5) et étant pourvu de :
- un premier siège de confinement (6) réalisé sur ladite face supérieure (4) ;
- un second siège de confinement (7), qui est réalisé sur ladite face supérieure (4), s'étend entre lesdites premières faces latérales (5) et est pourvu d'ouvertures d'accès (8) réalisées sur lesdites mêmes premières faces latérales (5) ;
- un canal de connexion (9), qui relie ensemble lesdits premier et second sièges de confinement (6, 7) ;
- un circuit imprimé (10), qui est placé à l'intérieur dudit premier siège de confinement (6) et qui porte au moins une source lumineuse DEL (11) installée dans celui-ci ;
- des moyens d'alimentation électrique et de commande (12), qui sont au moins partiellement logés dans ledit second siège de confinement (7), sont reliés électriquement audit circuit imprimé (10) à travers ledit canal de connexion (9) au moins pour alimenter en énergie électrique ladite au moins une source lumineuse DEL (11) et comprennent des éléments de connexion électrique (13) s'étendant au moins jusqu'à une des deux ouvertures d'accès (8) dudit second siège de confinement (7) ;
- des moyens de protection (14), qui sont fixés audit corps de base (2), sont placés en tant que couvercle desdits premier et second sièges de confinement (6, 7) et sont transparents au moins à la lumière visible au moins au niveau dudit premier siège de confinement (6) ;
dans lequel lesdits moyens d'alimentation électrique et de commande (12) comprennent une unité électronique (15), qui est logée dans ledit second siège de confinement (7) et est reliée électriquement audit circuit imprimé (10) à travers ledit canal de connexion (9) ; lesdits éléments de connexion électrique (13) étant reliés électriquement à ladite unité électronique (15) et s'étendant, à partir de celle-ci, à l'intérieur dudit second siège de confinement (7) au moins jusqu'à l'ouverture d'accès (8) correspondante dudit second siège de confinement (7) ;
**caractérisé en ce que**
ledit second siège de confinement (7) est divisé au moins en une chambre de logement (24), qui est espacée desdites premières faces latérales (5), et en un canal de passage (25), qui s'étend entre lesdites deux ouvertures d'accès (8) et communique avec ladite chambre de logement (24) à travers une ouverture de passage (26) ; ladite unité électronique (15) étant au moins placée principalement dans ladite chambre de logement (24) et lesdits éléments de connexion électrique (13) s'étendant au moins partiellement à l'intérieur dudit canal de passage (25) à partir de ladite unité électronique (15) jusqu'à au moins ladite ouverture d'accès (8) correspondante.

2. Dispositif d'éclairage (1) selon la revendication 1, **caractérisé en ce que** lesdits éléments de connexion électrique (13) font saillie à partir de l'ouverture d'accès (8) correspondante dudit second siège de confinement (7).

3. Dispositif d'éclairage (1) selon la revendication 1 ou 2, **caractérisé en ce que** ladite unité électronique (15) comprend des terminaisons de contact (16) et lesdits éléments de connexion électrique (13) comprennent au moins une plaque (17), qui est pourvue de pistes conductrices (18), une pour chaque terminaison de contact (16) de ladite unité électronique (15).

4. Dispositif d'éclairage (1) selon les revendications 2 ou 3, **caractérisé en ce que** la plaque (17) desdits éléments de connexion électrique (13) s'étend entre une première extrémité (19) logée dans ledit second siège de confinement (7) et une seconde extrémité (20) placée à l'extérieur dudit second siège de confinement (7) et faisant saillie à partir de ladite ouverture d'accès (8) correspondante ; lesdites pistes conductrices (18) s'étendant chacune entre un premier orifice (21), qui est réalisé sur ladite plaque (17) au niveau de ladite première extrémité (19) et est engagé par une terminaison de contact correspondante (16) de ladite unité électronique (15), et un second orifice (22), qui est réalisé sur ladite plaque (17) au niveau de ladite seconde extrémité (20).

5. Dispositif d'éclairage (1) selon la revendication 4, **caractérisé en ce que** les terminaisons de contact (16) de ladite unité électronique (15) comprennent chacune au moins une partie de tige filetée, qui est placée pour traverser le premier orifice (21) d'une piste conductrice (18) correspondante de ladite plaque (17) et porte au moins un écrou fileté (23), vissé dans celle-ci, afin de bloquer ladite plaque (17) en position.

6. Dispositif d'éclairage (1) selon l'une quelconque des revendications 3 à 5, **caractérisé en ce que**
ladite unité électronique (15) comprend au moins trois desdites terminaisons de contact (16) et la plaque (17) desdits éléments de connexion électrique (13) comprend au moins trois desdites pistes conductrices (18) correspondantes, y compris deux pistes conductrices d'alimentation (18) réglées pour l'alimentation en énergie électrique de ladite au moins une source lumineuse DEL (11) à travers ladite unité électronique (15) et au moins une piste conductrice de signal (18) réglée pour la communication de données avec ladite unité électronique (15).

7. Dispositif d'éclairage (1) selon l'une quelconque des revendications précédentes, **caractérisé en ce que** ledit canal de connexion (9) s'étend entre lesdits premier et second sièges de confinement (6, 7) pour au moins une partie de sa longueur sur la face inférieure (3) dudit corps de base (2).

8. Dispositif d'éclairage (1) selon l'une quelconque des revendications précédentes, **caractérisé en ce que** ledit second siège de confinement (7) est couvert par une seconde couche de résine polymère au moins jusqu'à la face supérieure (4) dudit corps de base (2) afin d'isoler la partie desdits moyens d'alimentation électrique et de commande (12) logés dans ledit second siège de confinement (7).

9. Dispositif d'éclairage (1) selon l'une quelconque des revendications précédentes, **caractérisé en ce que** lesdits moyens de protection (14) comprennent au moins un dôme de protection (27), qui est placé au niveau dudit premier siège de confinement (6) afin de couvrir ledit circuit imprimé (10) et ladite au moins une source lumineuse DEL (11) et est réalisé en un matériau qui est transparent au moins à la lumière visible.

10. Dispositif d'éclairage (1) selon la revendication 9, **caractérisé en ce que** ledit dôme de protection (27) est pourvu d'une bride périphérique (28) ;
lesdits moyens de protection (14) étant pourvus d'un anneau de blocage (29), qui est traversé par ledit dôme de protection (27), et est pourvu d'au moins une partie de contre-dépouille (30) placée contre ladite bride périphérique (28) et est fixé audit corps de base (2) afin de bloquer ledit dôme de protection (27), en maintenant ladite bride périphérique (28) interposée sous pression entre ladite partie de contre-dépouille (30) de celui-ci et ledit corps de base (2).

11. Dispositif d'éclairage (1) selon la revendication 10, **caractérisé en ce que** lesdits moyens de protection (14) comprennent au moins un joint d'étanchéité (31), qui s'étend le long de ladite bride périphérique (28) ;
au moins une partie dudit joint d'étanchéité (31) étant interposée entre la partie de contre-dépouille (30) dudit anneau de blocage (29) et la bride périphérique (28) dudit dôme de protection (27) et au moins une partie dudit joint d'étanchéité (31) étant interposée entre ladite bride périphérique (28) et ledit corps de base (2).

12. Dispositif d'éclairage (1) selon l'une quelconque des revendications précédentes, **caractérisé en ce que** lesdits moyens de protection (14) comprennent au moins un couvercle (32), qui est fixé audit corps de base (2) au niveau dudit second siège de confinement (7) afin de couvrir au moins une partie desdits moyens d'alimentation électrique et de commande (12).

13. Ensemble d'éclairage (100) pour zones d'atterrissage d'aéronef, en particulier pour héliports, vertiports ou aéroports, qui comprend deux ou plusieurs dispositifs d'éclairage (1) selon l'une quelconque des revendications précédentes, placés côte à côte de manière successive, adjacents l'un à l'autre, dans lequel l'une des deux premières faces latérales (5) du corps de base (2) de chaque dispositif d'éclairage (1) fait face à l'une des deux premières faces latérales (5) du corps de base (2) du dispositif adjacent, et dans lequel les ouvertures d'accès (8) réalisées dans lesdites premières faces latérales (5) se faisant face communiquent entre elles ;
les éléments de connexion électrique (13) des moyens d'alimentation électrique et de commande (12) de l'un desdits dispositifs d'éclairage (1) étant susceptibles d'être reliés à une source d'alimentation électrique et les éléments de connexion électrique (13) des moyens d'alimentation électrique et de commande (12) de chacun desdits autres dispositifs d'éclairage (1) étant reliés en séquence aux moyens d'alimentation électrique et de commande (12) dudit dispositif d'éclairage adjacent (1).
